# FASCICULE DE BREVET EUROPEEN

(11) **EP 3 585 754 B1**
(45) Date de publication et mention de la délivrance du brevet: **06.01.2021**
(21) Numéro de dépôt: 18710096.1
(22) Date de dépôt: 21.02.2018
(51) Int. Cl.: C04B 35/80, C04B 35/117, C04B 35/14, C04B 35/18, C04B 35/185, C04B 35/46, C04B 35/488, C04B 35/632

(54) **PROCEDE DE PREPARATION DE MATERIAUX COMPOSITES A MATRICE OXYDE ET A RENFORTS OXYDES PAR UN PROCEDE DE CALEFACTION**
VERFAHREN ZUR HERSTELLUNG VON VERBUNDSTOFFEN MIT EINER OXIDMATRIX UND OXIDVERSTÄRKUNGEN MITTELS EINES HEIZVERFAHRENS
METHOD FOR PREPARING COMPOSITE MATERIALS WITH AN OXIDE MATRIX AND OXIDE REINFORCEMENTS BY MEANS OF A HEATING PROCESS

(30) Priorité: 23.02.2017 FR 1751427
(43) Date de publication de la demande: 01.01.2020
(73) Titulaire: Commissariat à l'énergie atomique et aux énergies alternatives, 75015 Paris (FR); Centre National de la Recherche Scientifique, 75016 Paris (FR); Université de Bordeaux, 33000 Bordeaux (FR)
(72) Inventeur: ALLEMAND, Alexandre, 33800 Bordeaux (FR); DAVID, Patrick, 37540 Saint-Cyr-sur-Loire (FR); BROISSON, Pierre, 52100 Chancenay (FR); BESNARD, Clémence, 91330 Yerres (FR); MAILLE, Laurence, 33600 Pessac (FR)
(74) Mandataire: Brevalex
(86) Numéro de dépôt international: PCT/FR2018/050404
(87) Numéro de publication internationale: WO 2018/154232

(56) Documents cités:
- EP-A1- 0 081 409
- EP-A2- 2 045 225
- WO-A1-99/40043
- Patrick G David ET AL: "RAPID DENSIFICATION OF CARBON AND CERAMIC MATRIX COMPOSITES MATERIALS BY FILM BOILING PROCESS", , 31 juillet 2007 (2007-07-31), XP055437935, Extrait de l'Internet: URL:http://www.iccm-central.org/Proceeding s/ICCM16proceedings/contents/pdf/WedH/WeHA 1-03sp_davidp222770p.pdf [extrait le 2018-01-03]
- ROVILLAIN D ET AL: "Film boiling chemical vapor infiltration - An experimental study on carbon/carbon composite materials", CAR, ELSEVIER, OXFORD, GB, vol. 39, no. 9, 1 août 2001 (2001-08-01), pages 1355-1365, XP004319979, ISSN: 0008-6223, DOI: 10.1016/S0008-6223(00)00255-4
- NADEAU ET AL: "Analytical and numerical study of the densification of carbon/carbon composites by a film-boiling chemical vapor infiltration process", CHEMICAL ENGINEERING SCI, OXFORD, GB, vol. 61, no. 22, 30 octobre 2006 (2006-10-30), pages 7509-7527, XP005840647, ISSN: 0009-2509, DOI: 10.1016/J.CES.2006.08.027

## Description

### DOMAINE TECHNIQUE

L'invention concerne un procédé de préparation de matériaux composites à matrice oxyde et à renforts oxydes aussi appelés matériaux composites oxyde/oxyde.

Selon l'invention, ces matériaux composites sont préparés par un procédé, technique dit procédé, technique de caléfaction. Le procédé de caléfaction est un procédé bien connu, qui est aussi appelé procédé « *Film boiling Chemical Vapour Infiltration* » ou « *Film boiling CVI* » en langue anglaise, ou encore procédé « *Kalamazoo ».*

Plus précisément, l'invention a trait à un procédé de préparation, par une technique, procédé de caléfaction, d'un matériau composite constitué par une matrice en au moins un premier oxyde de métal ou de métalloïde renforcée par des renforts en au moins un deuxième oxyde de métal ou de métalloïde.

Le domaine technique de l'invention peut être défini comme celui des matériaux composites oxyde/oxyde qui comprennent une matrice en oxyde et des renforts en oxyde.

### ÉTAT DE LA TECHNIQUE ANTÉRIEURE

La très grande majorité des matériaux composites oxyde/oxyde est réalisée par une technique de frittage de poudres, par exemple par une technique de pressage unidirectionnel à chaud (« *hot pressing* » ou « *HP* » en anglais), mettant en œuvre la technique dite « *pre-preg ».*

Une autre voie consiste à élaborer ces matériaux composites oxyde/oxyde par la technique d'infiltration chimique en phase vapeur (« *Chemical Vapour Infiltration* » ou *« CVI* » en langue anglaise).

Dans cette technique d'infiltration chimique en phase vapeur « *CVI* », un précurseur gazeux va, au contact d'un substrat, réagir afin de former une phase solide.

Les réactions chimiques possibles peuvent être une décomposition, une réduction, une hydrolyse ou encore une oxydation. La formation d'un dépôt est conditionnée par l'activation thermique du substrat utilisé. Le gaz qui circule dans le four de CVI est constitué d'un précurseur et d'un gaz vecteur qui dilue ce précurseur. De plus, cette technique de CVI, fonctionne dans la plupart des cas à pression réduite afin de limiter l'apparition de courants de convection parasites, ce qui permet d'obtenir un dépôt homogène.

Cependant la mise en œuvre de cette technique de CVI est très lourde.

En outre, dans la technique de CVI, de manière générale, le fait de travailler avec un gaz dilué et à basse pression fait que la cinétique de dépôt est très lente, ce qui rend cette technique très coûteuse. Pour certaines pièces, la durée totale de densification peut être de plusieurs semaines.

Cependant, actuellement, la technique de CVI, est, avec la technique de pressage unidirectionnel à chaud (« *hot pressing* » ou « *HP* » en anglais), mettant en œuvre la technique dite « *pre-preg* », la technologie la plus utilisée afin de densifier des pièces pour les secteurs de pointe comme la défense ou l'aviation.

Toutefois, la lenteur de la technique de CVI, lorsqu'elle est appliquée à la préparation des matériaux composites oxyde/oxyde, la rend quasiment inexploitable. En outre, la technique de CVI est complexe du fait de la nature des précurseurs gazeux toxiques qu'elle utilise.

Finalement, la seule technique qui permet de préparer des matériaux composites oxyde/oxyde de manière rapide est la technique du frittage à chaud avec champ électrique pulsé (« *Spark Plasma Sintering* » ou « *SPS* » en anglais) qui est aussi connue sous la dénomination anglaise de « *Field Activated Sintering Technique* » ou « *FAST* », ou encore sous la dénomination de frittage flash. Mais cette technique demeure marginale et est utilisée seulement à l'échelle du laboratoire. De plus, cette technique est difficilement compatible avec l'utilisation d'une préforme tridimensionnelle.

Il existe donc, au regard de ce qui précède un besoin pour un procédé de préparation d'un matériau composite oxyde/oxyde qui ne présente pas les inconvénients, défauts et désavantages des procédés de préparation de matériaux composites oxyde/oxyde de l'art antérieur, et qui résolve les problèmes des procédés de préparation de matériaux composites oxyde/oxyde de l'art antérieur.

En particulier, il existe un besoin pour un procédé de préparation d'un matériau composite oxyde/oxyde dont la cinétique soit rapide et en tous cas, plus rapide que celle du procédé d'infiltration chimique en phase vapeur. Il existe aussi un besoin pour un procédé de préparation d'un matériau composite oxyde/oxyde qui soit simple, fiable, facile à mettre en œuvre, et d'un coût réduit.

Patrick G David et al.: "RAPID DENSIFICATION OF CARBON AND CERAMIC MATRIX COMPOSITES MATERIALS BY FILM BOILING PROCESS", (31 juillet 2007), ICCM International Conférences on Composite Materials, divulgue un procédé de préparation par une technique de caléfaction d'un matériau composite.

### EXPOSÉ DE L'INVENTION

Ce but, et d'autres encore, sont atteints conformément à l'invention par un procédé de préparation, par une technique de caléfaction, d'un matériau composite constitué par une matrice en au moins un premier oxyde d'au moins un métal et/ou d'au moins un métalloïde renforcée par des renforts en au moins un deuxième oxyde d'au moins un métal et/ou d'au moins un métalloïde, caractérisé en ce qu'on réalise les étapes successives suivantes :
- on dispose les renforts dans au moins un précurseur liquide du premier oxyde d'au moins un métal et/ou d'au moins un métalloïde;
- on chauffe lesdits renforts et le précurseur liquide, de façon à former le premier oxyde par décomposition thermique dudit précurseur liquide, et à déposer le premier oxyde ainsi formé autour des renforts et entre les renforts en formant ainsi la matrice.

Par précurseur liquide, on entend que le précurseur est liquide à la température ambiante, généralement de 20°C à 25°C, et à la pression atmosphérique.

Le procédé selon l'invention peut être défini comme un procédé de préparation d'un matériau composite constitué par une matrice en au moins un premier oxyde d'au moins un métal et/ou d'au moins un métalloïde renforcée par des renforts en au moins un deuxième oxyde d'au moins un métal et/ou d'au moins un métalloïde, ou plus simplement d'un matériau composite oxyde/oxyde par un procédé, une technique de caléfaction.

Le procédé selon l'invention se différencie fondamentalement des procédés de préparation de matériaux composites oxyde/oxyde de l'art antérieur en ce qu'il met en œuvre une technique extrêmement spécifique, à savoir la technique de caléfaction.

L'utilisation d'un procédé, technique de caléfaction aussi appelé procédé *« Film boiling Chemical Vapour Infiltration* » ou « *Film boiling CVI* » en langue anglaise, ou encore procédé « *Kalamazoo* » pour préparer des matériaux composites oxyde/oxyde n'est ni décrite ni suggérée dans l'art antérieur.

Il n'existe aucun document mentionnant ou suggérant d'utiliser la technique de caléfaction pour préparer des matériaux monophasés oxydes, et des matériaux composites oxydes/oxydes.

En effet, tout d'abord, on a vu plus haut que les techniques actuellement utilisées pour préparer les matériaux composites oxyde/oxyde étaient les techniques de frittage de poudres, par exemple la technique dite « *pre-preg* » et la technique d'infiltration chimique en phase vapeur (« *Chemical Vapour Infiltration* » ou « *CVI* » en langue anglaise).

Ensuite la technique de caléfaction, si elle est bien connue et utilisée notamment pour l'élaboration de composites C/C, C/SiC voire SiC/SiC, n'a jamais été mise en œuvre, pour l'élaboration de composites oxyde/oxyde.

Le procédé de densification par caléfaction a été notamment décrit dans le document [1], publié en 1982. Ce document décrit un procédé de densification d'une structure poreuse, par exemple en carbone ou en graphite, dans lequel on immerge la structure poreuse dans un précurseur qui est un hydrocarbure liquide, tel que le cyclohexane, on chauffe l'ensemble par induction, par exemple à une température de 1000°C à 1300°C, de façon à former, par décomposition de l'hydrocarbure, du carbone ou du graphite pyrolytique qui se dépose à l'intérieur des pores de la structure poreuse.

Un circuit réfrigérant permet de condenser l'hydrocarbure non consommé et de le récupérer afin de limiter les pertes en précurseur.

La densification s'effectue dans la zone la plus chaude, au cœur de la structure. Un front de densification progresse vers l'extérieur de la préforme au fur et à mesure que celle-ci se densifie. Ce front est dû à un fort gradient thermique, de plusieurs centaines de degrés par millimètres entre la partie proche du suscepteur et celle proche du liquide.

Dans la technique de caléfaction, contrairement à ce qui se produit dans la technique d'infiltration chimique en phase vapeur (« *Chemical Vapour Infiltration* » ou « *CVI »* en langue anglaise), on contraint l'environnement proche du substrat à être saturé en vapeur à cause de l'effet Leidenfrost.

De plus, le liquide étant constamment à ébullition, les turbulences autour de la structure chaude assurent un flux de réactifs constant ainsi qu'un renouvellement continu de la phase vapeur. Ainsi, la durée de densification est considérablement réduite par rapport à la technique CVI, d'un facteur 50 à 100.

Suite à sa description dans le document [1], la technique de densification par caléfaction ne s'est développée et industrialisée que pour densifier des pièces ou préformes carbonées avec du carbone, des carbures, et éventuellement des nitrures.

Ainsi, le document [2] décrit un procédé de densification d'une préforme poreuse comprenant :
- l'immersion de la préforme poreuse dans un liquide précurseur qui peut se décomposer sous l'effet de la chaleur ;
- le chauffage de la préforme poreuse dans le liquide précurseur à une température qui est suffisante pour décomposer le précurseur liquide et pour déposer un premier produit de décomposition du précurseur liquide au sein de la préforme ;
- l'arrêt du chauffage de la préforme dans le précurseur liquide avant que la surface de la préforme ne soit densifiée, moyennant quoi on forme une préforme partiellement densifiée ;
- l'achèvement de la densification par un procédé de dépôt chimique en phase vapeur dans une atmosphère comprenant un précurseur gazeux qui se décompose en un second produit de décomposition au sein des parties non densifiées de la préforme.

Selon un premier mode de réalisation, le premier produit de décomposition peut comprendre du carbone, et alors le précurseur liquide comprend un hydrocarbure tel que le cyclohexane.

Ou bien, le premier produit de décomposition comprend du carbure de silicium et le précurseur liquide comprend un organosilane tel que le méthyltrichlorosilane (MTS).

Le premier produit de décomposition peut aussi être du nitrure de silicium.

La préforme est notamment en fibres de carbone non-tissées.

Donc, ce document porte exclusivement sur l'élaboration d'un matériau composite comprenant une matrice en carbone, carbure de silicium, ou nitrure de silicium, et des renforts en fibres de carbone.

Il n'y a aucune mention ni aucune suggestion dans ce document de la préparation de matériaux composites oxyde/oxyde.

Le document [3] décrit un procédé de densification d'une structure poreuse notamment en carbone, graphite, alumine ou nitrure de bore, par du nitrure de bore. Pour cela, la structure poreuse est placée dans un précurseur choisi parmi les borazines, et on chauffe l'ensemble par induction, sous une pression d'au moins 1,2 10⁵ Pa de façon, à former, par décomposition du précurseur, du nitrure de bore qui se dépose à l'intérieur des pores de la structure poreuse.

La structure poreuse peut être en carbone, graphite alumine, ou nitrure de bore.

Donc, ce document [3] porte exclusivement sur l'élaboration d'un matériau composite comprenant une matrice en nitrure de bore et des renforts en carbone, graphite alumine, ou nitrure de bore.

Il n'y a aucune mention ni aucune suggestion dans ce document de la préparation de matériaux composites oxyde/oxyde, c'est-à-dire de matériaux dont aussi bien la matrice que les renforts sont tous deux en oxydes. En effet, même si la structure poreuse peut être éventuellement en alumine, cette structure est densifiée par du BN et non par un oxyde, et le matériau ainsi obtenu n'est donc pas un composite oxyde/oxyde.

Le procédé de caléfaction s'applique actuellement notamment à la densification de tissus ou de feutres qui peuvent être employés pour réaliser des disques de frein d'avion ou bien d'autres pièces utilisées dans l'aéronautique. En effet, les pièces réalisées sont d'excellents isolants thermiques et ont une grande résistance aux chocs et à l'abrasion.

Il a été mis en évidence, selon l'invention, de manière surprenante que la technique de caléfaction pouvait effectivement s'appliquer à la densification de structures poreuses en oxyde de métal ou de métalloïde par un autre oxyde, en d'autres termes que la technique de caléfaction pouvait s'appliquer à la préparation de matériaux composites oxyde/oxyde, plus précisément de matériaux composites comprenant une matrice en oxyde de métal ou de métalloïde et des préformes également en oxyde de métal ou de métalloïde.

Les exemples donnés plus bas montrent que le procédé selon l'invention a été effectivement mis en œuvre avec succès pour préparer des matériaux composites oxyde/oxyde, tels que des matériaux composites dont la matrice est constituée de SiO₂ ou d'Al₂O₃ avec renforts fibreux d' Al₂O₃ ou de mullite.

Le procédé selon l'invention présente tous les avantages de la technique de caléfaction qui ont déjà été exposés plus haut notamment en termes de rapidité du procédé.

Le procédé selon l'invention surmonte tous les inconvénients des procédés de préparation de matériaux composites oxyde/oxyde de l'art antérieur qui mettent en œuvre non pas une technique de caléfaction mais des techniques de frittage de poudres, par exemple la technique dite « *pre-preg* », et la technique d'infiltration chimique en phase vapeur (« *Chemical Vapour Infiltration* » ou « *CVI* » en langue anglaise).

Le procédé selon l'invention apporte une solution aux procédés de l'art antérieur de préparation de matériaux composites oxyde/oxyde et présente de nombreux avantages sur ces procédés notamment sur les procédés mettant en œuvre une technique de CVI.

Ainsi, la durée du procédé selon l'invention est considérablement réduite par rapport à un procédé mettant en œuvre la technique CVI, par exemple d'un facteur 50 à 100.

A titre d'exemple, la durée totale du procédé selon l'invention est de 20 à 60 minutes, alors que la durée totale d'un procédé mettant en œuvre la technique de CVI pour préparer le même matériau composite oxyde/oxyde est de 3 heures à 48 heures.

Un autre avantage du procédé selon l'invention est qu'il est mis en œuvre à la pression atmosphérique, et non sous une pression réduite comme les procédés mettant en œuvre la technique de CVI, ce qui simplifie grandement le dispositif pour mettre en œuvre le procédé selon l'invention et en réduit le coût.

Les matériaux préparés par le procédé selon l'invention possèdent d'excellentes propriétés mécaniques et thermiques, au moins équivalentes à celles des matériaux préparés par les procédés de l'art antérieur, tels que les procédés qui mettent en œuvre la technique de CVI.

En particulier, les matériaux composites oxyde/oxyde préparés par le procédé selon l'invention sont d'excellents isolants thermiques et ont une bonne tenue à l'oxydation et de bonnes propriétés mécaniques et physiques.

Avantageusement, le premier oxyde d'au moins un métal et/ou d'au moins un métalloïde peut être choisi parmi SiO₂, Al₂O₃, ZrO₂, TiO₂, la mullite, à savoir le composé défini de formule 3Al₂O₃, 2SiO₂, les aluminosilicates, par exemple l'aluminosilicate de Baryum (BAS), et leurs mélanges.

Avantageusement, le deuxième oxyde d'au moins un métal et/ou d'au moins un métalloïde peut être choisi parmi la silice, l'alumine, la mullite, à savoir le composé défini de formule 3Al₂O₃, 2SiO₂, et leurs mélanges.

Le premier oxyde d'au moins un métal et/ou d'au moins un métalloïde et le deuxième oxyde d'au moins un métal et/ou d'au moins un métalloïde peuvent être identiques ou différents.

Par exemple, le premier oxyde d'au moins un métal et/ou d'au moins un métalloïde, et le deuxième oxyde d'au moins un métal et/ou d'au moins un métalloïde peuvent être tous deux de l'alumine. Le matériau composite préparé est donc alors un matériau composite alumine/alumine.

Avantageusement, les renforts peuvent être des fibres.

Les fibres peuvent former des fils, des tissus, des feutres ou des structures tridimensionnelles à fibres longues.

Avantageusement, le précurseur liquide a une température d'ébullition inférieure à 300°C, de préférence inférieure à 250 °C, de préférence encore inférieure à 200°C.

Avantageusement, le précurseur liquide peut être choisi parmi tous les précurseurs liquides utilisés dans la technique de dépôt chimique en phase vapeur (CVD) ou dans la technique sol-gel. Du fait des différences fondamentales qui existent entre la technique de CVD ou la technique sol-gel et la technique de caléfaction, il est surprenant que des précurseurs utilisés dans la technique de dépôt chimique en phase vapeur (CVD) ou dans la technique sol-gel puissent être utilisés avec succès dans la technique de caléfaction pour former une matrice oxyde.

Avantageusement, le précurseur liquide peut être choisi parmi les composés organométalliques et les composés organométalloïdes.

Avantageusement, les composés organométalliques peuvent être choisis parmi les alcoxydes/alcoolates de métaux, et les composés organométalloides peuvent être choisis parmi les alcoxydes/alcoolates de métalloïdes.

Avantageusement, les composés organométalliques peuvent être choisis parmi les composés organométalliques comprenant un métal choisi parmi le zirconium, l'aluminium, le titane, le cérium, l'yttrium, le lanthane, le plomb, l'étain, l'antimoine, le bore, le vanadium, l'indium, le niobium, le bismuth et le hafnium.

De préférence, les composés organométalliques peuvent être choisis parmi les trialkoxy aluminium comme le trisec butoxide aluminium (aussi appelé aluminium butoxide); l'acétyl acétonate d'aluminium ; les tétraalkoxy zirconium comme le zirconium tert butoxide, le tétra-n-propoxy zirconium (« TPOZ ») ou le tétra-i-propoxy-zirconium ; et les tétraalkoxy titane comme le tétraisopropoxy titane.

Avantageusement, les composés organométalloïdes peuvent être choisis parmi les organosilanes.

De préférence, les composés organométalloïdes peuvent être choisis parmi les tétraalkoxy silanes comme le tétraéthyl orthosilicate (TEOS), ou le tétraméthyl orthosilicate (TMOS); le méthyltrichlorosilane (MTS), le diméthyldichlorosilane, et le méthyldichlorosilane.

Dans la présente, les groupes alkoxy peuvent être linéaires ou ramifiés, et comprennent de 1 à 10 atomes de carbone, de préférence de 1 à 6 C, de préférence encore de 1 à 4 C.

Avantageusement, les renforts et le précurseur liquide peuvent être chauffés à une température de 700°C à 1200°C, de préférence à une température de 800°C à 1100°C, pendant une durée de 5 à 120 minutes, de préférence de 15 à 60 minutes. Les plages de température et de durée précisées ci-dessus, et *a fortiori* les plages de température et de durée préférées mentionnées plus haut, permettent d'obtenir les meilleurs résultats, à savoir une matrice dense, homogène, sans fissure et sans carbone.

Les renforts et le précurseur liquide peuvent être chauffés par un chauffage inductif ou par un chauffage résistif.

D'autres caractéristiques et avantages de l'invention ressortiront mieux à la lecture de description détaillée qui suit des modes de réalisation particuliers de l'invention, notamment sous la forme d'exemples.

Cette description est donnée à titre illustratif et non limitatif et est faite en relation avec les dessins joints.

### BRÈVE DESCRIPTION DES DESSINS

- La Figure 1 est une vue schématique en coupe verticale d'un réacteur de densification par caléfaction, dit réacteur de « Kalamazoo » qui peut être utilisé pour mettre en œuvre le procédé selon l'invention, et qui est utilisé dans les exemples.
- La Figure 2 est une photographie prise en microscopie optique, d'une coupe, perpendiculaire au support en carbone graphite, de l'échantillon E01 préparé dans l'exemple 1.
   L'échelle portée sur la Figure 2 représente 100 µm.
- La Figure 3 est une photographie prise en microscopie optique, d'une coupe, perpendiculaire au support en carbone graphite, de l'échantillon E02, préparé dans l'exemple 2.
   L'échelle portée sur la Figure 3 représente 300 µm.
- La Figure 4 est une photographie prise en microscopie optique, à un plus fort grossissement, d'une coupe, perpendiculaire au support en carbone graphite, de l'échantillon E02, préparé dans l'exemple 2.
   L'échelle portée sur la Figure 4 représente 100 µm.
- La Figure 5 est une photographie prise en microscopie optique, d'une coupe, perpendiculaire au support en carbone graphite, de l'échantillon E03, préparé dans l'exemple 3.
   L'échelle portée sur la Figure 5 représente 30 µm.
- La Figure 6 est une photographie prise en microscopie optique, d'une coupe, perpendiculaire au support en carbone graphite, de l'échantillon E04, préparé dans l'exemple 4.
   L'échelle portée sur la Figure 6 représente 50 µm.
- La Figure 7 est une photographie prise en microscopie optique, à un plus fort grossissement, d'une coupe, perpendiculaire au support en carbone graphite, de l'échantillon E04, préparé dans l'exemple 4.
   L'échelle portée sur la Figure 7 représente 30 µm.
- La Figure 8 est une photographie prise en microscopie optique, d'une coupe, perpendiculaire au support en carbone graphite, de l'échantillon E05, préparé dans l'exemple 5.
   L'échelle portée sur la Figure 8 représente 300 µm.
- La Figure 9 est une photographie prise en microscopie optique, à un plus fort grossissement, d'une coupe, perpendiculaire au support en carbone graphite, de l'échantillon E05, préparé dans l'exemple 5.
   L'échelle portée sur la Figure 9 représente 50 µm.
- La Figure 10 est une photographie prise en microscopie optique, d'une coupe, perpendiculaire au support en carbone graphite, de l'échantillon E06, préparé dans l'exemple 6.
   L'échelle portée sur la Figure 10 représente 200 µm.
- La Figure 11 est une photographie prise en microscopie optique, à un plus fort grossissement, d'une coupe, perpendiculaire au support en carbone graphite, de l'échantillon E06, préparé dans l'exemple 6.
   L'échelle portée sur la Figure 11 représente 30 µm.
- La Figure 12 est une photographie prise en microscopie optique, d'une coupe, perpendiculaire au support en carbone graphite, de l'échantillon E07, préparé dans l'exemple 7.
   L'échelle portée sur la Figure 12 représente 50 µm.
- La Figure 13 est une photographie prise en microscopie optique, à un plus fort grossissement, d'une coupe, perpendiculaire au support en carbone graphite, de l'échantillon E07, préparé dans l'exemple 7.
   L'échelle portée sur la Figure 13 représente 30 µm.

### EXPOSÉ DÉTAILLÉ DE MODES DE RÉALISATION PARTICULIERS

Selon l'invention, on place des renforts d'une forme quelconque dans au moins un précurseur liquide du premier oxyde d'au moins un métal et/ou d'au moins un métalloïde, puis on chauffe l'ensemble, c'est-à-dire les renforts et le précurseur liquide, de façon à former le premier oxyde par décomposition thermique dudit précurseur liquide, et à déposer le premier oxyde ainsi formé autour des renforts en formant ainsi la matrice.

Par « placer dans au moins un précurseur liquide », on entend généralement que les renforts sont entièrement immergés, noyés dans un volume du précurseur liquide.

Le premier oxyde d'au moins un métal et/ou d'au moins un métalloïde et le deuxième oxyde d'au moins un métal et/ou d'au moins un métalloïde peuvent être choisis parmi les composés cités plus haut.

Généralement, les renforts sont des fibres, et ces fibres peuvent former des fils, des tissus, des feutres ou des structures tridimensionnelles à fibres longues, ou toute autre structure.

Selon l'invention, il a été montré que certains précurseurs liquides peuvent, de manière étonnante, lorsqu'ils étaient utilisés dans la technique de caléfaction, former des matrices d'oxyde par décomposition thermique. Les matrices préférées sont les matrices en SiO₂, ZrO₂, TiO₂ ou Al₂O₃.

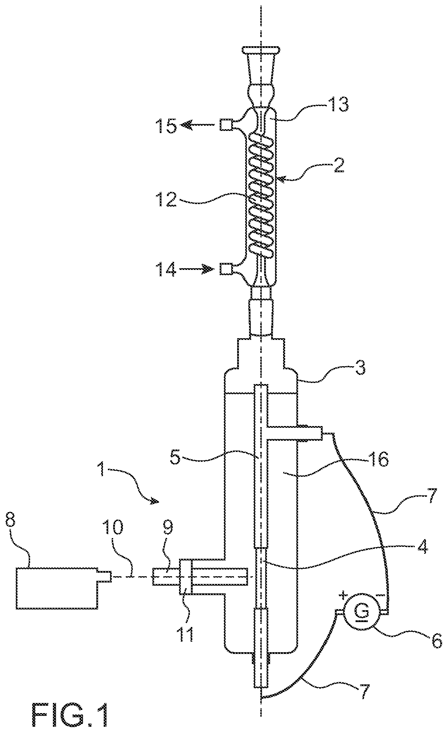

Ces précurseurs, pour être utilisés dans la technique de caléfaction et dans le dispositif pour mettre en œuvre cette technique tel que le dispositif présenté sur la Figure 1 doivent impérativement être liquides à température ambiante.

De préférence, ces précurseurs liquides ont une température d'ébullition inférieure à 300°C, de préférence inférieure à 250°C, de préférence encore inférieure à 200°C. En effet, une telle température d'ébullition, inférieure à 300°C, permet une optimisation de la décomposition du précurseur.

Des précurseurs adéquats ont déjà été cités plus haut.

Les organométalliques ou organosilanes, plus précisément les alcoxydes/alcoolates de métaux ou de silicium sont les précurseurs liquides préférés pour obtenir des dépôts d'oxydes par une technique de caléfaction.

Des exemples de ces précurseurs liquides préférés sont présentés dans le Tableau I ci-dessous.

Les précurseurs liquides mentionnés dans le Tableau I sont des molécules utilisées en chimie douce afin d'obtenir par sol/gel les oxydes recherchés par polymérisation et polycondensation. Il a été mis en évidence, de manière surprenante, selon l'invention que ces molécules utilisées dans la technique sol-gel pouvaient jouer le rôle de précurseur liquide dans la technique de caléfaction.

**Tableau I.**

| Matrice recherchée | Précurseur | Température de fusion | Température d'ébullition | Produits de craquage majoritaires |
|---|---|---|---|---|
| SiO₂ | Tétraéthyl orthosilicate | -82.49°C | 168°C | SiO₂, éthanol, éthylène, éthanal |
| ZrO₂ | Zirconium tert butoxide | < 25°C | 81°C à 3 torr | ZrO₂ ,isobutane, isobutène, 2-méthylpropan-2-ol |
| TiO₂ | Tétraisopropoxy titane | 14°C | 232°C | TiO₂, propène, propane, isopropanol |
| Al₂O₃ | Trisec butoxide aluminium | < 25°C | 206°C à 30 torr | Al₂O₃, 2-butanol, 2-butène |

D'autres précurseurs liquides peuvent être aussi utilisés, il s'agit par exemple du tetraméthyl orthosilicate (TMOS) et de l'acétyl acétonate d'aluminium.

Dans les exemples qui suivent, le tetraéthyl orthosilicate (TEOS) et le trisec butoxide aluminium (aluminium butoxide) sont utilisés dans un réacteur de caléfaction afin de réaliser des dépôts de silice ou d'alumine sur des structures fibreuses ou planes, montrant ainsi que le procédé selon l'invention a été effectivement mis en œuvre avec succès.

Les renforts et le précurseur liquide peuvent être chauffés à une température de 700°C à 1200°C, de préférence à une température de 800°C à 1100°C, pendant une durée de 5 à 120 minutes, de préférence de 15 à 60 minutes.

La figure 1 illustre un dispositif susceptible d'être utilisé pour la mise en œuvre du procédé selon l'invention.

Ce dispositif comprend essentiellement deux parties, à savoir un réacteur ou enceinte 1, et un condenseur, réfrigérant, ou échangeur de chaleur 2.

La paroi 3 du réacteur est en un matériau compatible avec le précurseur liquide utilisé et qui supporte les températures mises en œuvre dans le procédé. Un tel matériau est par exemple le borosilicate.

Le substrat, constitué par les renforts, sur lequel le dépôt d'oxyde est effectué, est placé, disposé, supporté par une structure ou pièce 4 qui a par exemple la forme d'un cylindre ou mandrin.

Cette structure ou pièce 4 qui supporte le substrat, constitué par les renforts, doit impérativement être en un matériau conducteur de l'électricité, tel que le carbone graphite. Cette pièce 4, notamment en carbone graphite, est appelée support ou suscepteur.

Un porte-échantillon 5 en un matériau conducteur de l'électricité par exemple en laiton, formant aussi des électrodes, permet d'accrocher la structure ou pièce 4 qui supporte le substrat constitué par les renforts sur lequel est effectué le dépôt d'oxyde.

Le chauffage du réacteur 1 est un chauffage résistif.

Pour réaliser ce chauffage résistif, le porte échantillon 5 et donc la structure ou pièce 4 qui supporte le substrat sont reliés à une alimentation électrique, ou générateur 6 par l'intermédiaire de câbles 7, et la structure ou pièce 4 qui supporte le substrat, s'échauffe donc par effet Joule.

La température du substrat peut être mesurée par un pyromètre infrarouge 8 pourvu d'une visée pyrométrique 9, qui détecte sans contact les rayonnements 10 émanant de la source de chaleur constituée par le substrat chauffé et qui ont traversé la paroi 3 du réacteur au niveau d'un hublot transparent 11.

Le pyromètre 8 peut être relié à un programmateur permettant de réguler la puissance de l'alimentation électrique afin de contrôler la température du substrat.

Le réacteur 1 peut comprendre un conduit (non représenté) permettant l'introduction du précurseur liquide en continu à l'intérieur du réacteur 1 et un orifice muni d'une vanne située dans la partie inférieure du réacteur et permettant la vidange de celui-ci.

Le réacteur 1 est surmonté du condenseur, réfrigérant, ou échangeur de chaleur 2.

Le condenseur 2, comporte un serpentin 12, qui reçoit les vapeurs, contenant essentiellement des vapeurs du précurseur, issues de la réaction de caléfaction.

Un liquide de refroidissement tel que de l'eau, de l'éthylèneglycol ou autre circule dans une chemise 13 entourant le serpentin entre une alimentation ou arrivée de liquide de refroidissement 14 et une sortie ou évacuation de liquide de refroidissement 15.

Dans le condenseur 2, les vapeurs, issues de la réaction de caléfaction, sont refroidies et on fait en sorte que la température de refroidissement soit telle que, essentiellement, seules les vapeurs du précurseur soient condensées. Le précurseur liquide ainsi récupéré est ensuite renvoyé dans le réacteur 1.

On décrit ci-après la séquence opératoire permettant la préparation d'un matériau composite oxyde/oxyde selon l'invention.

### Séquence opératoire :

On dispose le substrat constitué par les renforts sur le support 4 à l'intérieur du réacteur 1, puis on effectue éventuellement un balayage du réacteur 1 à l'aide d'un gaz inerte, afin de chasser l'oxygène éventuellement présent à l'intérieur du réacteur.

On remplit alors le réacteur avec le précurseur liquide 16.

Après avoir mis en fonctionnement le circuit réfrigérant 12, 14, 15 et l'alimentation électrique 6, le programmateur, et le pyromètre 8, on démarre la montée en température du substrat. On augmente ensuite la puissance du chauffage jusqu'à ébullition et reflux du précurseur 16. Celui-ci, sous forme liquide, pénètre, s'infiltre, dans les vides, par exemple dans les pores du substrat.

Lorsque l'on atteint la température de décomposition thermique ou *"cracking"* (800°C par exemple, pour le TEOS), les vapeurs de précurseur 16 subissent une décomposition thermique ou "cracking" dans le substrat, ce qui conduit à la formation de l'oxyde et au dépôt de celui-ci à l'intérieur des vides, par exemple à l'intérieur des pores du substrat, entre les renforts, et sur les renforts, autour des renforts qui constituent le substrat. On forme ainsi une matrice d'oxyde. On peut aussi parler de densification du substrat. Plus précisément, la décomposition thermique ou *"cracking"* se réalise au niveau des parties les plus chaudes du substrat.

Le front de densification se propage depuis la partie du substrat au contact du support 4 vers la partie du substrat éloignée du support.

Par exemple, dans le cas d'un substrat placé sur un support cylindrique 4, ce substrat comprenant donc une paroi intérieure au contact du support 4 et une paroi extérieure éloignée du support, le front de densification progresse depuis la paroi intérieure vers la paroi extérieure.

Le front de densification se propage dans le substrat au cours du procédé à une vitesse qui peut varier entre quelques dixièmes de millimètres par heure et quelques centimètres par heure, en fonction de la température maximale du substrat, échantillon et de sa nature.

Les gaz de décomposition thermique ou "cracking" s'échappent du substrat, par exemple par les pores non encore obturés.

Les gaz issus de la réaction sont évacués dans la partie supérieure du réacteur.

Le substrat est ensuite refroidi.

Le procédé selon l'invention trouve notamment son application dans l'aéronautique, le spatial, et l'automobile.

### EXEMPLES

L'invention va maintenant être décrite en référence aux exemples suivants, donnés à titre illustratif et non limitatif.

Dans ces exemples, le procédé selon l'invention est mis en œuvre en utilisant un dispositif de densification par caléfaction.

Ainsi, afin de réaliser des dépôts d'oxydes par caléfaction, un dispositif de densification par caléfaction autrement dit un dispositif de « *Kalamazoo* » à l'échelle du laboratoire a été mis au point.

Ce dispositif est sensiblement analogue à celui représenté sur la Figure 1.

Ce dispositif comprend un réacteur 1 constitué d'une enceinte 3 en borosilicate, et peut accueillir 200 mL de précurseur de caléfaction liquide 16.

Un porte échantillon en laiton 5, formant aussi des électrodes, permet d'accrocher la structure ou pièce 4 qui supporte le substrat (à savoir les renforts) sur lequel est effectué le dépôt d'oxyde.

La structure ou pièce 4 qui supporte le substrat sur lequel le dépôt d'oxyde est effectué, doit impérativement être en un matériau conducteur de l'électricité, tel que le carbone graphite, cette pièce, notamment en carbone graphite, est appelée support ou suscepteur.

Le porte échantillon 5 est directement relié à une alimentation électrique 6, par exemple une alimentation électrique dénommée Power Supply EA PSI 9080-100, par l'intermédiaire de câbles 7.

Le réacteur de « *Kalamazoo* » 1 est conçu afin d'être utilisé en chauffage résistif. C'est donc par effet joule que le support 4 s'échauffe, de 25°C à plus de 1400°C selon la puissance fournie au système.

La température de ce support ne peut pas être précisément suivie à l'aide de thermocouples.

Un pyromètre 8, par exemple un pyromètre Ircon Modline® 3, est donc utilisé afin de connaître précisément la température du support chauffé (en effet le support et le substrat ont sensiblement la même température). Il s'agit d'un thermomètre infrarouge qui détecte sans contact les rayonnements 10 émanant de la source de chaleur, ici le support 4 et le substrat.

Le support 4 atteint des températures très élevées ce qui provoque localement la vaporisation et le craquage du précurseur.

Le réacteur 1 est équipé d'un condenseur de Graham 2 dans lequel circule de l'éthylène glycol, entre une arrivée d'éthylène glycol 14 généralement à 0°C et une sortie d'éthylène glycol 15. Ce condenseur de Graham 2 est utilisé afin de limiter les pertes du précurseur aux seuls gaz de craquage non condensable à 0°C.

Il est à noter qu'il est également possible d'utiliser un réacteur avec un chauffage par induction comme décrit dans les documents [1], [2], ou [3].

Dans les exemples qui suivent, qui illustrent le procédé selon l'invention (Exemples 3 à 7), trois substrats, ont été principalement utilisés, ces substrats sont disposés, placés sur le support et constituent les renforts de la matrice du matériau composite préparé par le procédé selon l'invention.

Etant donné que le réacteur de « *Kalamazoo* » fonctionne de manière résistive, il est impératif d'utiliser comme base pour le support un barreau en carbone graphite.

Pour préparer les substrats utilisés dans les exemples qui illustrent le procédé selon l'invention, sur le support constitué par un barreau en carbone graphite sont placées, disposées, différentes fibres ou tissu de fibres, qui viendront ensuite jouer le rôle de renfort fibreux dans le matériau composite préparé par le procédé selon l'invention.

Plus exactement, les fibres ou le tissu de fibres sont enroulés sur le barreau en carbone graphite.

Les trois substrats utilisés dans les exemples qui suivent qui illustrent le procédé selon l'invention ont été préparés en plaçant, disposant sur le barreau en carbone utilisé comme support, plus exactement en enroulant autour du barreau en carbone graphite respectivement :
- un fil constitué par des fibres Nextel® 610. Ce sont des fibres disponibles auprès de la société 3M® de 10 à 12 µm de diamètre constituées à 99% par de l'alumine ;
- un fil constitué par des fibres Nextel® 440. Ce sont des fibres disponibles auprès de la société 3M® de 8 µm de diamètre constitué de 98% de mullite (2% bore). La mullite est un solide cristallin, composé défini de formule (3Al₂O₃,2SiO₂). Ces fibres sont des isolants électriques et thermiques et ne peuvent pas être chauffées via effet Joule mais uniquement par conduction thermique, par contact direct avec le barreau de carbone graphite ;
- un tissu de fibres Nextel® 440.

Par le procédé selon l'invention mis en œuvre avec le réacteur décrit plus haut, on peut densifier par caléfaction ces substrats en fibres d'oxydes en formant une matrice oxyde et on peut donc ainsi réaliser des matériaux oxyde/oxyde.

Dans les exemples 1 et 2 qui suivent, on dépose de la silice et de l'alumine sur un simple barreau de carbone utilisé comme support et qui joue ici aussi le rôle de substrat de dépôt.

Les conditions des expériences réalisées dans les exemples 1 et 2 sont exposées dans le Tableau II, ci-dessous :

**Tableau II.**

| Exemple | Substrat | Température du substrat | Durée |
|---|---|---|---|
| 1 | Barreau de carbone graphite | 900°C | 63 minutes |
| 2 | Barreau de carbone graphite | 900°C | 28 minutes |

### Exemple 1.

Dans cet exemple, un barreau de carbone graphite d'un diamètre de 3 mm et d'une hauteur 7 cm est utilisé comme support, et aussi comme substrat, suscepteur.

Le barreau, immergé dans 200 mL de précurseur liquide, est chauffé à 900°C pendant 63 minutes.

La tension employée est de 6,98 V et l'intensité de 58,4 A, soit une puissance délivrée de 407,6 W.

Le précurseur liquide utilisé est le Tetraéthyl Orthosilicate (TEOS) (fournisseur Sigma Aldrich®, pureté >99%) qui forme de la silice par décomposition thermique.

On procède ensuite à la caractérisation de l'échantillon EO1 (900°C - 1h) ainsi obtenu.

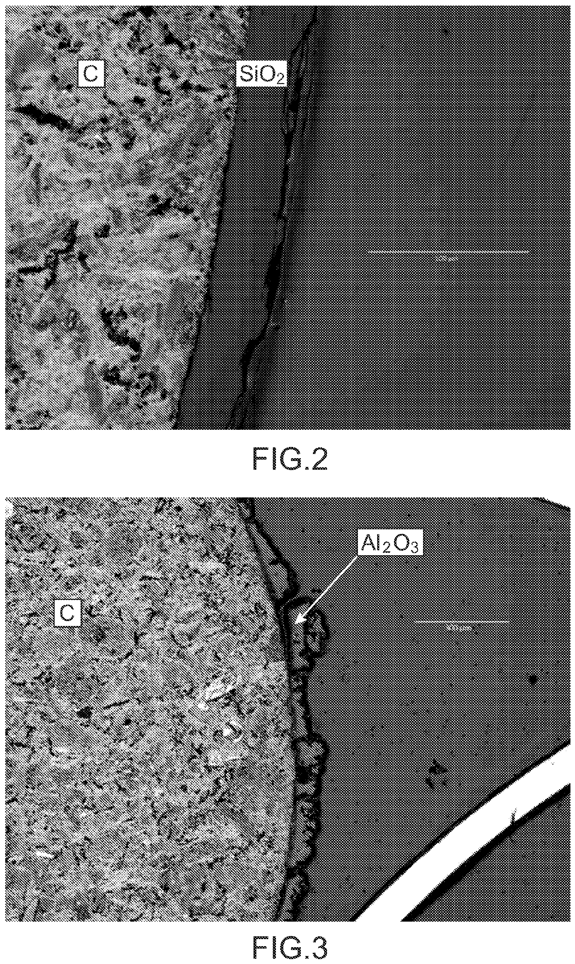

La Figure 2 est une photographie prise en microscopie optique d'une coupe de l'échantillon E01.

On observe un dépôt sous la forme d'un revêtement de silice d'une épaisseur constante, de l'ordre de 40 µm.

La caractérisation chimique du dépôt montrant qu'il s'agit de silice est réalisée par micro sonde de Castaing.

Aucune fissure n'est présente sur la couche déposée à 900°C. L'épaisseur de la couche de SiO₂ déposée est homogène sur l'ensemble de la surface du barreau de carbone.

### Exemple 2.

Dans cet exemple, un barreau de carbone graphite d'un diamètre de 3 mm et d'une hauteur 7 cm est utilisé comme support et comme substrat, suscepteur.

Le barreau, immergé dans 200 mL de précurseur liquide, est chauffé à 900°C pendant 28 minutes.

La tension employée est de 8,64 V et l'intensité de 65 A, soit une puissance délivrée de 561,2 W.

Dans cet exemple, la caléfaction est effectuée avec un autre précurseur que dans l'exemple 1, à savoir avec de l'aluminium trisec butoxide (fournisseur Sigma Aldrich®, pureté 97%) dans le but de former de l'alumine par décomposition thermique.

On procède ensuite à la caractérisation de l'échantillon EO2 (900°C - 28 min) ainsi obtenu.

La Figure 3 est une photographie prise en microscopie optique de l'échantillon E02.

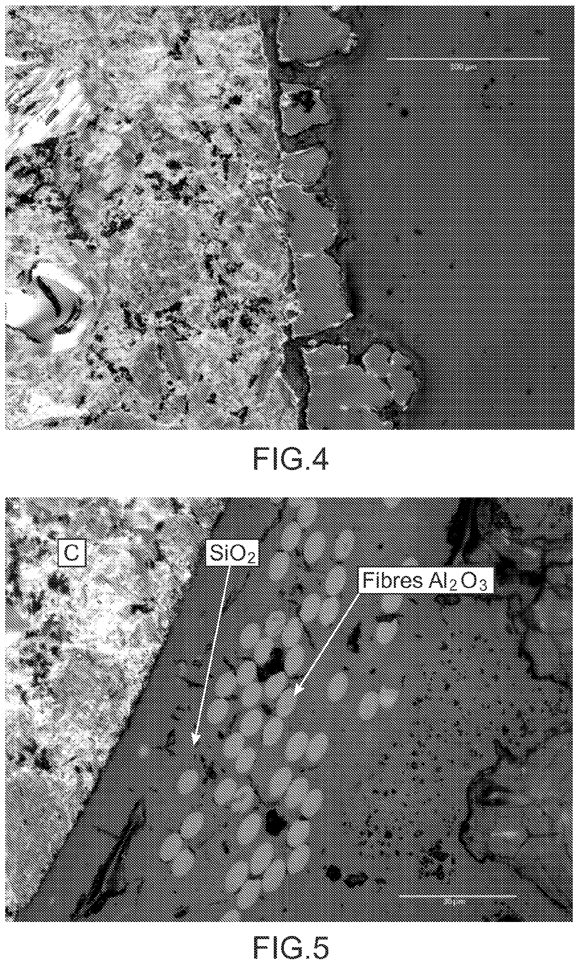

La Figure 4 est aussi une photographie prise en microscopie optique de l'échantillon E02 mais à un plus fort grossissement.

On observe sur ces clichés, qu'un dépôt sous la forme d'un revêtement d'alumine a été réalisé à 900°C.

Ce dépôt est très friable, très fin, d'une épaisseur de 40 µm, et est très fissuré lorsqu'on le compare au dépôt de silice obtenu par décomposition du TEOS dans l'exemple 1.

Une analyse par microsonde de Castaing a été réalisée et a confirmé que le dépôt obtenu a la composition atomique Al₂O₃.

Dans les exemples 3 à 7 qui suivent, on dépose de la silice sur un substrat de fibres d'oxyde ou d'un tissu de fibres d'oxyde, ce substrat étant disposé, plus exactement enroulé sur un support constitué par un barreau de carbone graphite.

Les conditions des expériences réalisées dans les exemples 3 à 7 sont exposées dans le Tableau III ci-dessous :

**Tableau III.**

| Exemple | Support + substrat | Température du substrat | Durée |
|---|---|---|---|
| 3 | Barreau de carbone + Fibres alumine Nextel® 610 | 900°C | 28 minutes |
| 4 | Barreau de carbone + Fibres de mullite Nextel® 440 | 815°C | 28 minutes |
| 5 | Barreau de carbone + Fibres de mullite Nextel® 440 | 857°C | 28 minutes |
| 6 | Barreau de carbone + Tissu de mullite Nextel® 440 | 881°C | 28 minutes |
| 7 | Barreau de carbone + Fibres de mullite Nextel® 440 | 1000°C | 60 minutes |

### Exemple 3.

Dans cet exemple, on prépare un matériau composite composite SiO₂/Al₂O₃, plus exactement un matériau composite à matrice de SiO₂ renforcée par des fibres d'alumine, par le procédé selon l'invention.

Un barreau de carbone d'un diamètre de 3 mm et d'une hauteur de 7 cm est utilisé comme support. Des fils constitués de fibres d'alumine (fibres d'alumine Nextel® 610, d'un diamètre d'environ 10 µm) sont enroulés autour de ce support.

Le barreau, immergé dans 200 mL de précurseur liquide, est chauffé à 900°C pendant 28 minutes.

La tension employée est de 8,64 V et l'intensité de 65 A, soit une puissance délivrée de 561,6 W.

Le précurseur liquide utilisé est le Tetraéthyl Orthosilicate (TEOS) qui forme de la silice par décomposition thermique.

On procède ensuite à la caractérisation de l'échantillon E03 ((900°C-28 min) ainsi obtenu.

La Figure 5 est une photographie prise en microscopie optique de l'échantillon E03.

Cette image illustre tout d'abord le fait que les fibres d'alumine n'isolent pas thermiquement le suscepteur en graphite. Le phénomène de densification par caléfaction s'effectue donc même si un isolant thermique est enroulé autour du barreau de graphite et sépare la surface chaude du précurseur liquide.

Ensuite, pour ce qui concerne la microstructure, on peut voir que la silice forme une matrice dense autour des fibres d'alumine.

Le revêtement de silice autour des fibres d'alumine montre que le procédé de densification par caléfaction s'applique à l'élaboration de composites oxyde-oxyde.

### Exemple 4.

Dans cet exemple, on prépare un matériau composite SiO₂/mullite, plus exactement un matériau composite à matrice de SiO₂ renforcée par des fibres de mullite, par le procédé selon l'invention.

Un barreau de carbone d'un diamètre de 3 mm et d'une hauteur de 7 cm est utilisé comme suscepteur. Des fils constitués de fibres de mullite (fibres de mullite Nextel® 440, d'un diamètre de 8 µm) sont enroulés autour de ce suscepteur.

Le barreau, immergé dans 200 mL de précurseur liquide, est chauffé à 815°C pendant 28 minutes.

La tension employée est de 6,74 V et l'intensité de 64,3 A, soit une puissance délivrée de 433 W.

Le précurseur liquide utilisé est le Tetraéthyl Orthosilicate (TEOS) qui forme de la silice par décomposition thermique.

On procède ensuite à la caractérisation de l'échantillon E04 (815 °C - 28 min) ainsi obtenu.

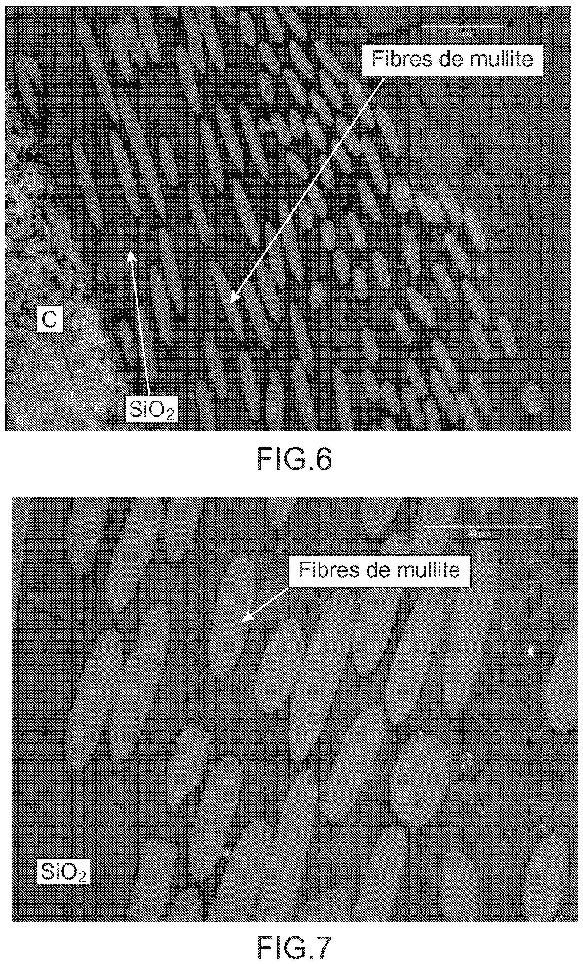

La Figure 6 est une photographie prise en microscopie optique de l'échantillon E04.

Ce cliché montre que, même à une faible température du substrat (815°C), le TEOS peut être utilisé afin de créer une matrice silice entre des fibres d'oxydes.

La Figure 7 est aussi une photographie prise en microscopie optique de l'échantillon E04, mais à un plus fort grossissement.

Dans cet échantillon, préparé à une faible température du substrat, il est possible de constater que la matrice de silice est parfaitement infiltrée dans la structure fibreuse de mullite, et qu'elle est dense, homogène et exempte de fissures. On observe également que la matrice ne contient pas de carbone. La matrice entourant les fibres de mullite est entièrement constituée de silice non fissurée.

### Exemple 5.

Dans cet exemple, on prépare un matériau composite SiO₂/mullite, plus exactement un matériau composite à matrice de SiO₂ renforcée par des fibres de mullite, par le procédé selon l'invention.

Un barreau de carbone d'un diamètre de 3 mm et d'une hauteur de 7 cm est utilisé comme support. Des fils constitués de fibres de mullite (fibres de mullite Nextel® 440, d'un diamètre de 8 µm) sont enroulés autour de ce support.

Le barreau, immergé dans 200 mL de précurseur liquide, est chauffé à 857°C pendant 28 minutes.

La tension employée est de 7,25 V et l'intensité de 66,9 A, soit une puissance délivrée de 485 W.

Le précurseur liquide utilisé est le Tetraéthyl Orthosilicate (TEOS) qui forme de la silice par décomposition thermique.

On procède ensuite à la caractérisation de l'échantillon E05 (857 °C - 28 min) ainsi obtenu.

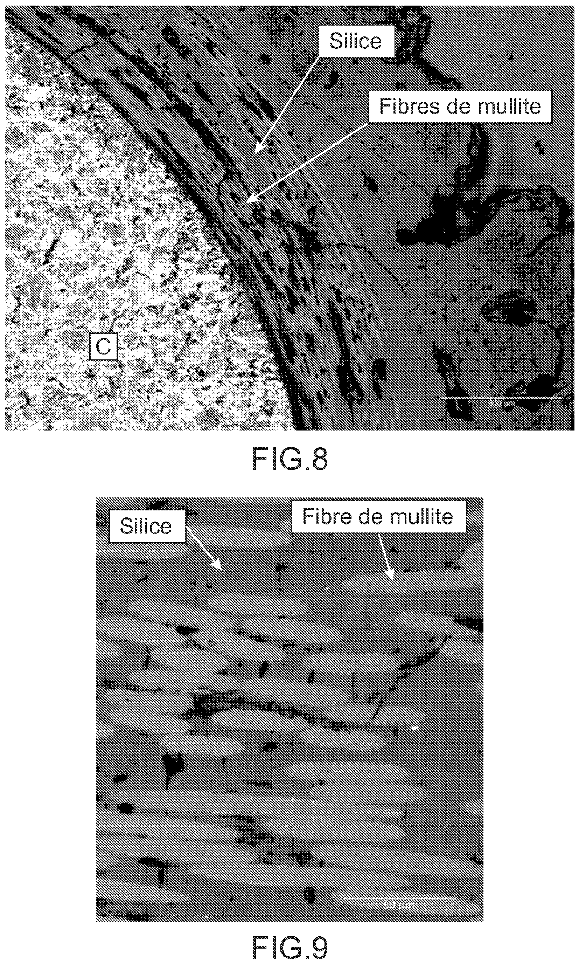

La Figure 8 est une photographie prise en microscopie optique de l'échantillon E05.

Ce cliché montre que, lorsque l'on utilise une température du substrat, à savoir 857°C, supérieure à celle utilisée pour préparer l'échantillon précédent EO4 dans l'exemple 4, l'échantillon E05 préparé, présente une matrice plus fissurée que la matrice de l'échantillon E04 avec de larges pores.

La Figure 9 est aussi une photographie prise en microscopie optique de l'échantillon E05, mais à un plus fort grossissement.

Ce cliché montre que, à l'intérieur des fibres de mullite, la silice formée, dense, présente quelques fissures et quelques petits pores mais pas de carbone. Le dépôt obtenu est donc exclusivement constitué de SiO₂.

### Exemple 6.

Dans cet exemple, on prépare un matériau composite SiO₂/mullite, plus exactement un matériau composite à matrice de SiO₂ renforcée par des fibres de mullite, par le procédé selon l'invention.

Un barreau de carbone d'un diamètre de 3 mm et d'une hauteur de 7 cm est utilisé comme support. Des fils constitués de fibres de mullite (fibres de mullite Nextel® 440, d'un diamètre de 8 µm) sont enroulés autour de ce support.

Le barreau, immergé dans 200 mL de précurseur liquide, est chauffé à 881°C pendant 28 minutes.

La tension employée est de 7,80 V et l'intensité de 65,7 A, soit une puissance délivrée de 512 W.

Le précurseur liquide utilisé est le Tetraéthyl Orthosilicate (TEOS) qui forme de la silice par décomposition thermique.

On procède ensuite à la caractérisation de l'échantillon E06 (881 °C - 28 min) ainsi obtenu.

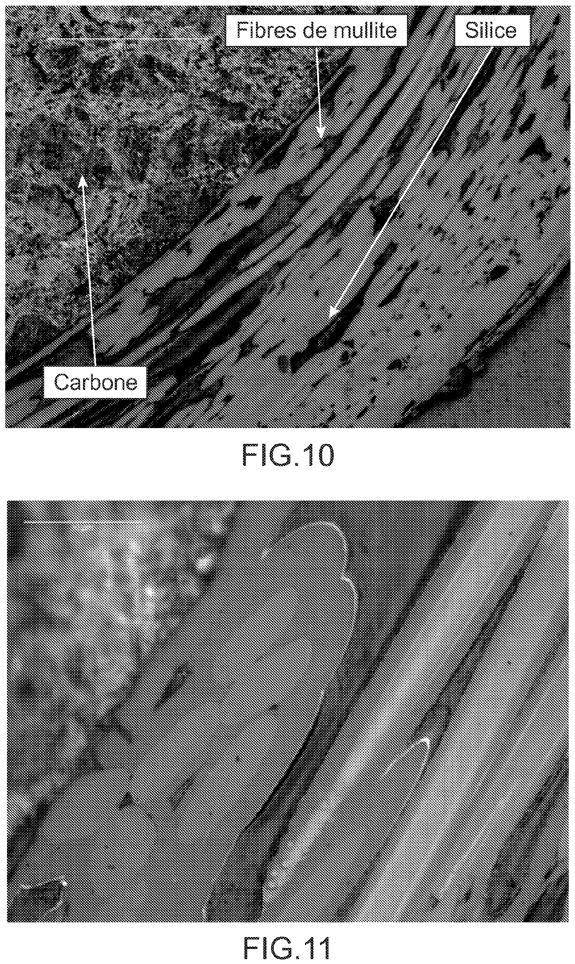

La Figure 10 est une photographie prise en microscopie optique de l'échantillon E06.

Ce cliché montre que, lorsque l'on utilise une température du substrat de 881°C, les fibres sont enrobées d'une matrice en silice non fissurée qui présente de larges pores.

La Figure 11 est aussi une photographie prise en microscopie optique de l'échantillon E06, mais à un plus fort grossissement.

A plus fort grossissement, on observe que la silice est bien infiltrée dans la zone intra-fibres. Il n'y a pas de décohésion entre les fibres et la matrice, mais si de larges pores sont présents, ils sont difficilement comblés par la matrice. De plus, en extrême limite du dépôt de silice, il est possible d'observer une zone plus claire, très fine, qui correspond à un dépôt de carbone d'épaisseur 27 nm. Cela signifie que lorsque l'on utilise une température du substrat de 881°C, qui est plus élevée que la température du substrat utilisée dans les exemples précédents, pour une durée de chauffage identique, du carbone peut se former. Ce carbone provient de la maturation du précurseur, qui est plus rapide lorsque que la température est plus élevée.

### Exemple 7.

Dans cet exemple, on prépare un matériau composite SiO₂/mullite, plus exactement un matériau composite à matrice de SiO₂ renforcée par un tissu de fibres de mullite, par le procédé selon l'invention.

Un barreau de carbone d'un diamètre de 3 mm et d'une hauteur de 7 cm est utilisé comme support. Un tissu de fibres de mullite (Fibres de mullite Nextel® 440, d'un diamètre de 8 µm) est enroulé autour de ce support afin d'expérimenter la caléfaction d'oxydes sur un substrat comportant un grand nombre de fibres.

Le barreau, immergé dans 200 mL de précurseur liquide, est chauffé à 1000°C pendant 60 minutes (1 heure).

La tension employée est de 7,62 V et l'intensité de 76,2 A, soit une puissance délivrée de 580 W.

Le précurseur liquide utilisé est le Tetraéthyl Orthosilicate (TEOS) qui forme de la silice par décomposition thermique.

On procède ensuite à la caractérisation de l'échantillon E07 ((1000°C - 1h) ainsi obtenu.

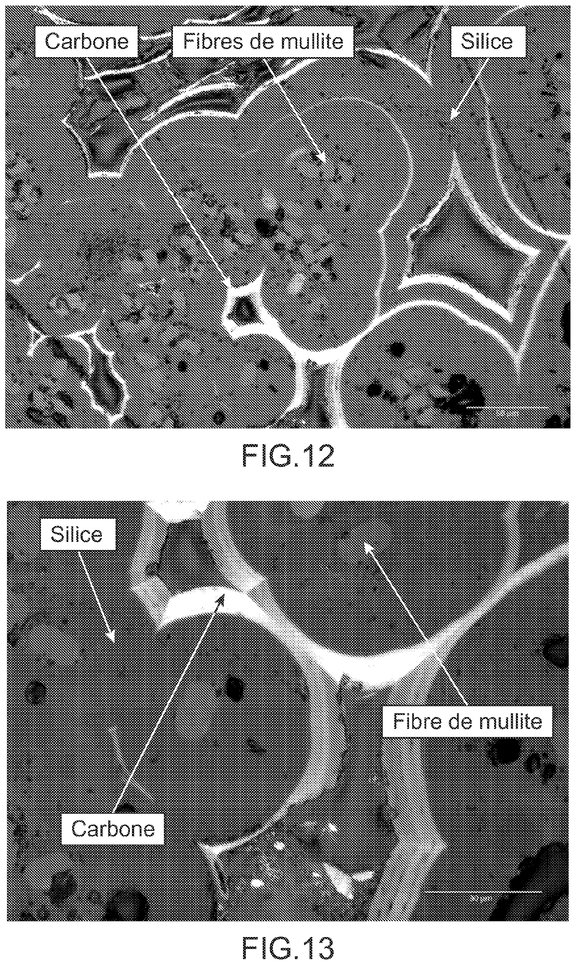

La Figure 12 est une photographie prise en microscopie optique de l'échantillon E07.

La Figure 13 est aussi une photographie prise en microscopie optique de l'échantillon E07, mais à un plus fort grossissement.

L'expérience réalisée dans cet exemple s'est déroulée à une température importante, à savoir 1000°C, pendant un temps conséquent, à savoir 1h.

Il est possible de constater sur les clichés des Figures 13 et 14 que la matrice de silice a bien infiltré les fibres. Cependant, cette matrice présente deux types de porosité, c'est-à-dire une porosité de petite taille proche des fibres, et une porosité de grande taille dès qu'il n'y a plus de fibres dans les zones de gros macropores. Il n'y a pas de fissuration à l'interface entre les fibres et la matrice. On observe la présence d'un liseré épais et brillant de carbone à l'intérieur de la matrice de silice en périphérie des larges pores. Ce carbone est dû à la maturation excessive du précurseur TEOS et à la décomposition de ses sous-produits comme l'éthanol et les autres molécules carbonées. La totalité du tissu a été densifiée par la silice sur une épaisseur estimée à 3 mm. Il est donc possible de faire des composites épais de l'ordre de quelque mm par le procédé selon l'invention.

### Conclusions des exemples.

Les exemples présentés plus haut apportent la preuve que des matériaux composites oxyde/oxyde avec des matrices de silice et d'alumine peuvent être préparés par le procédé selon l'invention.

Cependant, l'homme du métier comprendra que le procédé selon l'invention peut aussi être utilisé pour préparer des matériaux composites avec des matrices constituées par tout autre oxyde comme par exemple, la zircone ou l'oxyde de titane.

L'homme du métier saura en effet facilement déterminer le précurseur adéquat permettant de former l'oxyde choisi pour constituer la matrice.

De la même manière, les exemples présentés plus haut apportent la preuve que des matériaux composites oxyde/oxyde avec des renforts qui sont des fibres de mullite ou d'alumine peuvent être préparés par le procédé selon l'invention.

Cependant l'homme du métier comprendra que le procédé selon l'invention peut aussi être utilisé pour préparer des matériaux composites avec des renforts constitués par des fibres de silice ou par toute fibre d'oxyde.

De même, les renforts peuvent se présenter sous une forme quelconque par exemple, sous la forme de fils, de tissus ou bien de feutres ou bien encore de structures tridimensionnelles à fibres longues.

Le réacteur à chauffage résistif utilisé dans les exemples ne peut être utilisé que pour densifier des substrats pouvant être chauffés par effet Joule. Densifier des fibres en oxydes n'est donc généralement possible que pour une épaisseur de substrat faible, de l'ordre de quelques millimètres (voir exemple 7).

L'utilisation d'un chauffage inductif permet de chauffer directement des substrats en oxydes à densifier en s'affranchissant du suscepteur en carbone et de la forme cylindrique de la structure.

### REFERENCES

[1] HOUDAYER M., *et al., "Procédé de densification d'une structure poreuse":* EP-A1-0 081 409.
[2] CONNORS D. F. Jr., *"Partially densified carbon preform"* : WO-A1-99/40043.
[3] DAVID P., *et al., "Procédé de densification d'une structure poreuse par du nitrure de bore et structure poreuse densifiée par du nitrure de bore"* : FR-A1-2 712 884.

## Revendications

1. Procédé de préparation, par une technique de caléfaction, d'un matériau composite constitué par une matrice en au moins un premier oxyde d'au moins un métal et/ou d'au moins un métalloïde renforcée par des renforts en au moins un deuxième oxyde d'au moins un métal et/ou d'au moins un métalloïde, **caractérisé en ce que** l'on réalise les étapes successives suivantes :
- on dispose les renforts dans au moins un précurseur liquide du premier oxyde d'au moins un métal et/ou d'au moins un métalloïde;
- on chauffe lesdits renforts et le précurseur liquide, de façon à former le premier oxyde par décomposition thermique dudit précurseur liquide, et à déposer le premier oxyde ainsi formé autour des renforts et entre les renforts en formant ainsi la matrice.

2. Procédé selon la revendication 1, dans lequel le premier oxyde d'au moins un métal et/ou d'au moins un métalloïde est choisi parmi SiO₂, Al₂O₃, ZrO₂, TiO₂, la mullite à savoir le composé défini de formule 3Al₂O₃, 2SiO₂, les aluminosilicates, par exemple l'aluminosilicate de Baryum (BAS), et leurs mélanges.

3. Procédé selon la revendication 1 ou 2, dans lequel le deuxième oxyde d'au moins un métal et/ou d'au moins un métalloïde est choisi parmi la silice, l'alumine, la mullite, à savoir le composé défini de formule 3Al₂O₃, 2SiO₂, et leurs mélanges.

4. Procédé selon l'une quelconque des revendications précédentes, dans lequel les renforts sont des fibres.

5. Procédé selon la revendication 4, dans lequel les fibres forment des fils, des tissus, des feutres ou des structures tridimensionnelles à fibres longues.

6. Procédé selon l'une quelconque des revendications précédentes, dans lequel le précurseur liquide a une température d'ébullition inférieure à 300°C, de préférence inférieure à 250°C, de préférence encore inférieure à 200°C.

7. Procédé selon l'une quelconque des revendications précédentes, dans lequel le précurseur liquide est choisi parmi tous les précurseurs liquides utilisés dans la technique de dépôt chimique en phase vapeur (CVD) ou dans la technique sol-gel.

8. Procédé selon l'une quelconque des revendications précédentes, dans lequel le précurseur liquide est choisi parmi les composés organométalliques et les composés organométalloïdes.

9. Procédé selon la revendication 8, dans lequel les composés organométalliques sont choisis parmi les alcoxydes/alcoolates de métaux, et les composés organométalloïdes sont choisis parmi les alcoxydes/alcoolates de métalloïdes.

10. Procédé selon l'une quelconque des revendications 8 et 9, dans lequel les composés organométalliques sont choisis parmi les composés organométalliques comprenant un métal choisi parmi le zirconium, l'aluminium, le titane, le cérium, l'yttrium, le lanthane, le plomb, l'étain, l'antimoine, le bore, le vanadium, l'indium, le niobium, le bismuth et le hafnium.

11. Procédé selon l'une quelconque des revendications 8 à 10, dans lequel les composés organométalliques sont choisis parmi les trialkoxy aluminium comme le trisec butoxide aluminium ; l'acétyl acétonate d'aluminium ; les tétraalkoxy zirconium comme le zirconium tert butoxide, le tétra-n-propoxy zirconium (« TPOZ ») ou le tétra-i-propoxy-zirconium ; et les tétraalkoxy titane comme le tétraisopropoxy titane.

12. Procédé selon l'une quelconque des revendications 8 et 9, dans lequel les composés organométalloïdes sont choisis parmi les organosilanes.

13. Procédé selon la revendication 12, dans lequel les composés organométalloïdes sont choisis parmi les tétraalkoxy silanes comme le tétraéthyl orthosilicate (TEOS), ou le tétraméthylorthosilicate (TMOS) ; le méthyltrichlorosilane (MTS), le diméthyldichlorosilane, et le méthyldichlorosilane.

14. Procédé selon l'une quelconque des revendications précédentes, dans lequel les renforts et le précurseur liquide sont chauffés à une température de 700°C à 1200°C, de préférence à une température de 800°C à 1100°C, pendant une durée de 5 à 120 minutes, de préférence de 15 à 60 minutes.

15. Procédé selon l'une quelconque des revendications précédentes, dans lequel les renforts et le précurseur liquide sont chauffés par un chauffage inductif ou par un chauffage résistif.

## Patentansprüche

1. Verfahren zur Herstellung eines Verbundmaterials durch eine Erhitzungstechnik, wobei das Verbundmaterial aus einer Matrix aus zumindest einem ersten Oxid zumindest eines Metalls und/oder zumindest eines Metalloids besteht, die durch Verstärkungen aus zumindest einem zweiten Oxid zumindest eines Metalls und/oder zumindest eines Halbmetalls verstärkt ist, **dadurch gekennzeichnet, dass** die nachstehenden aufeinanderfolgenden Schritte ausgeführt werden:
- Anordnen der Verstärkungen in zumindest einem flüssigen Vorläufer des ersten Oxids zumindest eines Metalls und/oder zumindest eines Metalloids;
- Erhitzen der Verstärkungen und des flüssigen Vorläufers, um das erste Oxid durch thermische Zersetzung des flüssigen Vorläufers zu bilden und um das so gebildete erste Oxid um die Verstärkungen herum und zwischen den Verstärkungen abzuscheiden und so die Matrix zu bilden.

2. Verfahren nach Anspruch 1, wobei das erste Oxid zumindest eines Metalls und/oder zumindest eines Metalloids ausgewählt ist aus SiO₂, Al₂O₃, ZrO₂, TiO₂, Mullit, nämlich der definierten Verbindung der Formel 3Al₂O₃, 2SiO₂, Aluminosilikaten, beispielsweise Bariumaluminosilikat (BAS), und deren Gemischen.

3. Verfahren nach Anspruch 1 oder 2, wobei das zweite Oxid zumindest eines Metalls und/oder zumindest eines Metalloids ausgewählt ist aus Siliziumdioxid, Aluminiumoxid, Mullit, nämlich der definierten Verbindung der Formel 3Al₂O₃, 2SiO₂, und deren Gemischen.

4. Verfahren nach einem der vorstehenden Ansprüche, wobei die Verstärkungen Fasern sind.

5. Verfahren nach Anspruch 4, wobei die Fasern Garne, Gewebe, Filze oder dreidimensionale Langfaserstrukturen bilden.

6. Verfahren nach einem der vorstehenden Ansprüche, wobei der flüssige Vorläufer eine Siedetemperatur unter 300°C, vorzugsweise unter 250°C, noch bevorzugter unter 200°C aufweist.

7. Verfahren nach einem der vorstehenden Ansprüche, wobei der flüssige Vorläufer aus allen flüssigen Vorläufern ausgewählt ist, die bei der chemischen Gasphasenabscheidung (CVD) oder bei der Sol-Gel-Technik verwendet werden.

8. Verfahren nach einem der vorstehenden Ansprüche, wobei der flüssige Vorläufer aus Organometallverbindungen und Organometalloidverbindungen ausgewählt ist.

9. Verfahren nach Anspruch 8, wobei die Organometallverbindungen aus Metallalkoxiden/-alkoholaten ausgewählt sind und die Organometalloidverbindungen aus Metalloidalkoxiden/-alkoholaten ausgewählt sind.

10. Verfahren nach einem der Ansprüche 8 und 9, wobei die Organometallverbindungen aus Organometallverbindungen ausgewählt sind, die ein Metall enthalten, das aus Zirkonium, Aluminium, Titan, Cer, Yttrium, Lanthan, Blei, Zinn, Antimon, Bor, Vanadium, Indium, Niob, Wismut und Hafnium ausgewählt ist.

11. Verfahren nach einem der Ansprüche 8 bis 10, wobei die Organometallverbindungen ausgewählt sind aus Trialkoxy-Aluminium, wie Aluminiumtri-sec-butoxid; Aluminium-Acetylacetonat; Tetraalkoxyzirkonium, wie Zirkonium-tert-Butoxid, Tetra-n-propoxyzirkonium ("TPOZ") oder Tetra-i-propoxyzirkonium; und Tetraalkoxytitan, wie Tetraisopropoxytitan.

12. Verfahren nach einem der Ansprüche 8 und 9, wobei die Organometalloidverbindungen aus Organosilanen ausgewählt sind.

13. Verfahren nach Anspruch 12, wobei die Organometalloidverbindungen ausgewählt sind aus Tetraalkoxysilanen, wie Tetraethylorthosilikat (TEOS) oder Tetramethylorthosilikat (TMOS); Methyltrichlorsilan (MTS), Dimethyldichlorsilan und Methyldichlorsilan.

14. Verfahren nach einem der vorstehenden Ansprüche, wobei die Verstärkungen und der flüssige Vorläufer auf eine Temperatur von 700°C bis 1200°C, vorzugsweise auf eine Temperatur von 800°C bis 1100°C, für einen Zeitraum von 5 bis 120 Minuten, vorzugsweise 15 bis 60 Minuten, erhitzt werden.

15. Verfahren nach einem der vorstehenden Ansprüche, wobei die Verstärkungen und der flüssige Vorläufer durch induktive Erwärmung oder durch Widerstandserwärmung erhitzt werden.

## Claims

1. Method for preparing, by a calefaction technique, a composite material consisting of a matrix made of at least one first oxide of at least one metal and/or at least one metalloid reinforced by reinforcements made of at least one second oxide of at least one metal and/or at least one metalloid, **characterised in that** the following successive steps are carried out:
- the reinforcements are disposed in at least one liquid precursor of the first oxide of at least one metal and/or at least one metalloid;
- said reinforcements and the liquid precursor are heated, so as to form the first oxide by thermal decomposition of said liquid precursor, and to deposit the first oxide thus formed around the reinforcements and between the reinforcements thus forming the matrix.

2. Method according to claim 1, wherein the first oxide of at least one metal and/or at least one metalloid is chosen from SiO₂, Al₂O₃, ZrO₂, TiO₂, mullite, i.e. the defined compound of formula 3Al₂O₃, 2SiO₂, aluminosilicates, for example barium aluminosilicate (BAS), and the mixtures thereof.

3. Method according to claim 1 or 2, wherein the second oxide of at least one metal and/or at least one metalloid is chosen from silica, alumina, mullite, i.e. the defined compound of formula 3Al₂O₃, 2SiO₂, and the mixtures thereof.

4. Method according to any one of the preceding claims, wherein the reinforcements are fibres.

5. Method according to claim 4, wherein the fibres form threads, fabrics, felts or three-dimensional structures with long fibres.

6. Method according to any one of the preceding claims, wherein the liquid precursor has a boiling temperature of less than 300°C, preferably of less than 250°C, more preferably of less than 200°C.

7. Method according to any one of the preceding claims, wherein the liquid precursor is chosen from all the liquid precursors used in the chemical vapour deposition (CVD) technique or in the sol-gel technique.

8. Method according to any one of the preceding claims, wherein the liquid precursor is chosen from the organometallic compounds and the organometalloid compounds.

9. Method according to claim 8, wherein the organometallic compounds are chosen from the alkoxides/alcoholates of metals, and the organometalloid compounds are chosen from the alkoxides/alcoholates of metalloids.

10. Method according to any one of claims 8 and 9, wherein the organometallic compounds are chosen from the organometallic compounds comprising a metal chosen from zirconium, aluminium, titanium, cerium, yttrium, lanthanum, lead, tin, antimony, boron, vanadium, indium, niobium, bismuth and hafnium.

11. Method according to any one of claims 8 to 10, wherein the organometallic compounds are chosen from the trialkoxy aluminiums such as aluminium trisec-butoxide; aluminium acetylacetonate; the tetra alkoxy zirconiums such as zirconium tert-butoxide, tetra-n-propoxy zirconium ("TPOZ") or tetra-i-propoxy-zirconium; and the tetra alkoxy titaniums such as tetra isopropoxy titanium.

12. Method according to any one of claims 8 and 9, wherein the organometalloid compounds are chosen from the organosilanes.

13. Method according to claim 12, wherein the organometalloid compounds are chosen from the tetra alkoxy silanes such as tetraethyl orthosilicate (TEOS), or tetramethyl orthosilicate (TMOS); methyltrichlorosilane (MTS), dimethyldichlorosilane, and methyl dichlorosilane.

14. Method according to any one of the preceding claims, wherein the reinforcements and the liquid precursor are heated at a temperature of 700°C to 1200°C, preferably at a temperature of 800°C to 1100°C, for a period of 5 to 120 minutes, preferably of 15 to 60 minutes.

15. Method according to any one of the preceding claims, wherein the reinforcements and the liquid precursor are heated by inductive heating or resistive heating.
